# EUROPÄISCHE PATENTANMELDUNG

(11) **EP 2 228 293 A2**
(43) Veröffentlichungstag der Anmeldung: **15.09.2010**
(21) Anmeldenummer: 10002218.5
(22) Anmeldetag: 04.03.2010
(51) Int. Cl.: B62M 6/25

(54) **Antriebssystem für ein Leichtfahrzeug, insbesondere für ein Fahrrad**

(30) Priorität: 11.03.2009 DE 102009012608
(71) Anmelder: Schaeffler Technologies GmbH & Co. KG, 91074 Herzogenaurach (DE)
(72) Erfinder: Neubauer, Markus, 96117 Memmelsdorf (DE)

(57) **Zusammenfassung**

Die Erfindung betrifft ein Antriebssystem für ein Rad (4) eines Leichtfahrzeuges, umfassend einen Abschnittsweise hohl ausgebildeten Holm (2,3), an dem das Rad (4) drehbar gelagert ist, ein mit dem Rad (4) drehfest verbundenes Zahnrad (6), und einen elektrischen Motor (5), der das Zahnrad (6) antreibt. Die Aufgabe, ein Antriebssystem anzugeben, das platzsparend anzubringen ist, wird erfindungsgemäß dadurch gelöst, dass dass der Motor (5) innerhalb des hohl ausgebildeten Holms (2,3) angeordnet ist, und dass der Motor (5) abtriebsseitig ein Antriebszahnrad (7) antreibt, das direkt mit dem Zahnrad (6) kämmt. Die Erfindung betrifft weiter ein Zweirad, insbesondere Fahrrad, Pedelec oder E-Bike, mit einem derartigen Antriebssystem.

## Beschreibung

### Gebiet der Erfindung

Die Erfindung betrifft ein Antriebssystem nach dem Oberbegriff von Anspruch 1 für ein Leichtfahrzeug, insbesondere ein Fahrrad, Pedelec oder E-Bike, sowie ein Zweirad nach Anspruch 7.

Für Leichtfahrzeuge, speziell für Fahrräder, ist bekannt, diesen ein Antriebssystem zuzuordnen, das einen elektrischen Motor umfasst, wobei der elektrische Motor insbesondere als Hilfsantrieb vorgesehen ist, der dem menschlichen Bediener im Bedarfsfall unterstützt. Es ist weiter bekannt, bereits bestehende Leichtfahrzeuge, insbesondere Fahrräder, nachträglich mit einem Hilfsantrieb mit elektrischen Motor nachzurüsten. Ferner ist bekannt, den Motor möglichst nahe an eines der mindestens zwei Räder anzuordnen, wobei der Motor möglichst platzsparend angeordnet werden soll.

EP 1 063 162 A1 beschreibt ein Antriebssystem für ein Fahrrad, wobei ein elektrischer Motor außen an der Gabel des Vorderrades angeordnet ist. Der Motor treibt über ein Planetengetriebe ein Antriebszahnrad für einen Zahnriemen an, der in kämmenden Eingriff mit einem Zahnrad steht, das drehfest an dem Vorderrad befestigt ist. Die Druckschrift regt weiter an, einen Motor mit wesentlich geringerer Drehzahl vorzusehen, so dass das Planetengetriebe, das eine Übersetzung der Drehzahl der Ausgangswelle des Motors zu der Drehzahl bewirkt, mit der das Zahnrad bzw. das Antriebszahn angetrieben ist, entfallen kann. In diesem Fall treibt der Motor, ggf. über ein zwischengeschaltetes Umlenkgetriebe, den Zahnriemen direkt an. Nachteilig ist, dass der elektrische Motor außen an der Gabel des Vorderrades und damit weitgehend ungeschützt und auch außerhalb der Symmetrieebene des Fahrrades angeordnet ist. Ungünstig ist weiter, dass der Zahnriemen einen Platz beansprucht und Vorkehrungen getroffen werden müssen, um den Zahnriemen zu montieren bzw. zu schützen.

DE 10 2006 003 736 A1 beschreibt ein Antriebssystem für ein Fahrrad, wobei das Antriebssystem einen elektrischen Motor umfasst, der nahe dem Hinterrad des Fahrrades auf einem Hilfsbügel angeordnet ist, und wobei der Hilfsbügel an einer Verlängerung der Kettenstrebe befestigt ist. Der elektrische Motor treibt einen Zahnriemen an, der mit einem Zahnrad in kämmenden Eingriff steht, wobei das Zahnrad mit dem Hinterrad des Fahrrades drehfest verbunden ist. Der Zahnriemen sowie die Anordnung des Motors außerhalb des Hinterrades, die den Hilfsbügel als zusätzliches Bauteil erforderlich macht, erfordern für das Antriebssystem insgesamt einen beachtlichen Bauraum.

DE 10 2006 010 886 A1 beschreibt eine Zahnradscheibe, die als Bremsscheibe eines Fahrrades ausgebildet ist, und mit deren umlaufender Zähnung ein Zwischenzahnrad wahlweise in Eingriff bzw. außer Eingriff bringbar ist, je nachdem, ob die Zahnradscheibe einen Dynamo antreiben soll oder nicht. Die Funktion der Zahnradscheibe als Bremsscheibe einer Scheibenbremse des Fahrrades bleibt unbeeinflusst.

### Aufgabe der Erfindung

Es ist die Aufgabe der Erfindung, ein Antriebssystem anzugeben, das platzsparend anzubringen ist.

### Zusammenfassung der Erfindung

Diese Aufgabe wird für das eingangs genannte Antriebssystem erfindungsgemäß mit den Merkmalen des Anspruchs 1 insbesondere für ein Zweirad nach Anspruch 7 gelöst.

Weil der Motor innerhalb des hohl ausgebildeten Holms angeordnet ist, ist dieser von außen nicht erkennbar und innerhalb des Holms geschützt. Außerdem befindet sich der Motor in der Symmetrieebene oder zumindest nahe der Symmetrieebene insbesondere des Fahrrades, auch für den Fall, dass der Holm als Gabel ausgebildet ist, die zu beiden Seiten des Rades, speziell des Vorderrades, Gabelarme aufweist, und der Motor in einem der beiden Gabelarme angeordnet ist. Der Hohlraum in dem Holm bzw. in dem Gabelarm wird durch den Motor effektiv ausgenutzt.

Weil das von dem Motor abtriebsseitig angetriebene Antriebszahnrad direkt mit dem Zahnrad kämmt, das das Rad antreibt, entfällt eine Übersetzung, insbesondere wird ein Getriebe wie das Planetengetriebe überflüssig. Da die Drehzahl des Motors üblicherweise deutlich höher ist als die Drehzahl des angetriebenen Rades, kann das Antriebszahnrad eine nur geringe Zähnung aufweisen. Das Antriebszahnrad nimmt nur wenig Platz in Anspruch und kann bei Bedarf nahe oder in dem hohlen Holm, speziell in oder nahe dem Gabelarm des Vorderrades des Fahrrades, angeordnet sein. Übertragungsmittel wie Zahnriemen, Ketten oder dergleichen werden durch die unmittelbar ineinandergreifenden Zähne des Antriebszahnrades mit dem Zahnrad überflüssig, so dass sich der Aufbau und auch die Montage vereinfacht.

Vorzugsweise ist vorgesehen, dass der Motor abtriebsseitig ein Umlenkgetriebe antreibt. Das Umlenkgetriebe vermittelt eine räumliche Umorientierung des Drehmomentes der Ausgangswelle des Motors, die um ihre eigene Achse rotiert, so, dass das Antriebszahnrad um dessen eigene Achse rotieren kann, ohne das Drehmoment der Ausgangswelle des Motors wesentlich zu beeinflussen. Insbesondere wird das Drehzahl der Ausgangswelle des Motors nicht betragsmäßig herabgesetzt, wie es bei Planetengetrieben bekannt ist. Hierbei wird es möglich, einen Motor mit geringer Ausgangsdrehzahl vorzusehen, so dass dessen Ausgangsdrehzahl nicht eigens herabgesetzt werden muss, so dass die Leistungsaufnahme des Motors gering ausgelegt werden kann und -insbesondere bei Batteriebetrieb - das Leichtfahrzeug, insbesondere das Fahrrad, eine verlängerte Betriebszeit aufweist.

Das Umlenkgetriebe kann in einer einfachen Ausführung durch zwei miteinander kämmende Zahnräder ausgebildet sein, deren Drehachsen einen Winkel, insbesondere einen rechten Winkel, untereinander ausbilden, wobei das erste Zahnrad als Hilfszahnrad drehfest mit der Ausgangswelle des Motors verbunden und das zweite Zahnrad mit dem Antriebszahnrad identisch ist, das das mit dem Rad drehfeste Zahnrad antreibt.

Vorzugsweise ist eine Batterie als Energieversorgung des Motors vorgesehen, wobei die Batterie in dem hohl ausgebildeten Holm aufgenommen ist. Die Batterie ist dabei platzsparend und optisch verdeckt untergebracht, und zwar in räumlicher Nähe zu dem Motor.

Vorzugsweise ist ein Bremssystem vorgesehen, wobei das Zahnrad als Bremsscheibe des Bremssystems ausgebildet ist, die hydraulisch betätigbar ist, und wobei ein Sensor die Ausgangsleistung des Motors erfasst. Dabei lässt sich auf einfache Weise ein Anti-Blockier-System derart ausbilden, dass der Sensor die Motorleistung im Bremsfall erfasst und im Vergleich mit der Drehzahl des Zahnrades über ein Steuerungssystem die hydraulische Betätigung der an die Bremsscheibe angreifenden Bremsbacken gesteuert wird. Die Ausgangsleistung des Motors ist als Eingangsgröße des Steuerungssystems leicht erfassbar.

Hinsichtlich der Ausbildung des Bremssystems ist vorzugsweise vorgesehen, dass die hydraulische Betätigung der Bremsscheibe einen Druckminderer umfasst, der in dem Holm angeordnet ist. Das Bremssystem wird damit sehr einfach aufgebaut und lässt sich platzsparend unterbringen. Ist der Holm als Gabel eines Fahrrades ausgebildet, kann der Druckminderer in dem Gabelarm, in dem der Motor angeordnet ist, untergebracht sein, oder in dem anderen Gabelarm, so dass sich das Gewicht des Motors und des Druckminderers auf beide Gabelarme und damit beidseitig der Symmetrieebene des Fahrrades verteilt.

Vorzugsweise ist vorgesehen, dass in einem Bremsbetrieb die von dem Zahnrad übermittelte Energie gespeichert wird. Beispielsweise kann vorgesehen sein, dass das Zahnrad mit einer Einheit zur Erzeugung von elektrischer Energie gekoppelt wird, wenn der Motor ein Signal empfängt, das den Antrieb des Motors aussetzt. Alternativ oder ergänzend hierzu kann vorgesehen sein, dass die Ausgangswelle des Motors im Bremsbetrieb in einen Leerlauf übergeht, so dass die Ausgangswelle durch das noch in Bewegung befindliche Zahnrad in Drehung versetzt wird, und dass der Motor aus der derart gedrehten Ausgangswelle Energie gewinnt und speichert.

Weitere Vorteile und Merkmale der Erfindung ergeben sich aus den abhängigen Ansprüchen sowie aus der Beschreibung eines Ausführungsbeispiels.

Die Erfindung wird im folgenden unter Bezugnahme auf die anliegenden Zeichnungen näher erläutert und beschrieben.

### Kurze Beschreibung der Zeichnungen

- Fig. 1: zeigt ausschnittsweise eine Seitenansicht eines Ausführungsbeispiels eines erfindungsgemäßen Antriebssystem bei einem Ausführungsbeispiel eines erfindungsgemäßen Zweirades, und
- Fig. 2: zeigt eine geschnittene Ansicht des Ausführungsbeispiels aus Fig. 1, wobei die Schnittebene im wesentlichen senkrecht zu der Papierebene steht.

### Detaillierte Beschreibung der Zeichnung

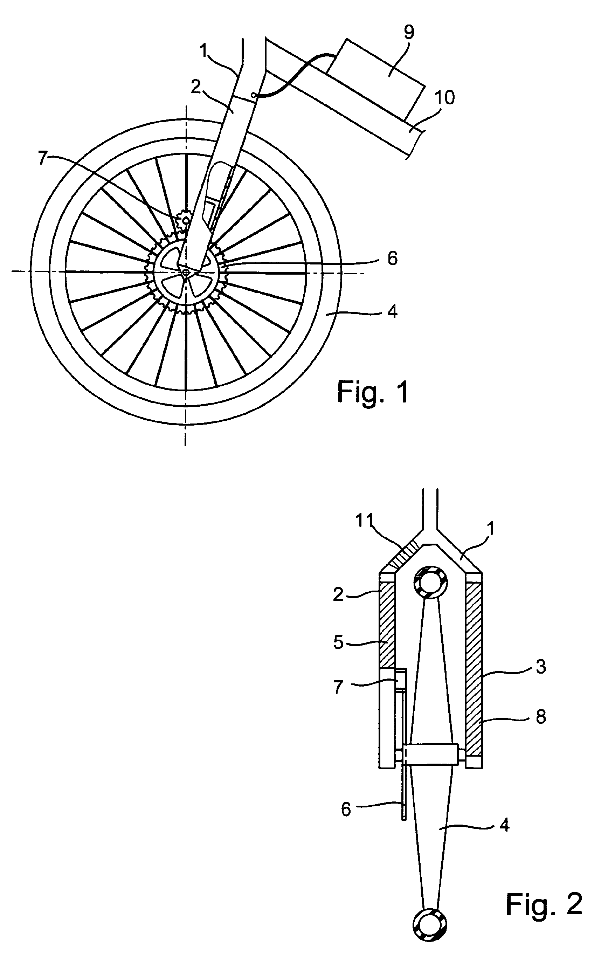

Fig. 1 und Fig. 2 zeigen ausschnittsweise ein Fahrrad, dessen Gehäuse einen als abschnittsweise hohle Vorderradgabel 1 ausgebildeten Holm umfasst. Die Vorderradgabel 1 umfasst einen ersten, abschnittsweise hohlen Gabelarm 2 sowie einen zweiten, symmetrisch zu dem ersten Gabelarm 2 ausgebildeten, in Fig. 2 erkennbaren Gabelarm 3. An den beiden Gabelarmen 2, 3 ist das als Vorderrad 4 des Fahrrades ausgebildete Rad drehbar gelagert.

Dem Vorderrad 4 ist als Hilfsantrieb ein Antriebssystem zugeordnet, wobei das Antriebssystem einen elektrischen Motor 5, ein mit dem Vorderrad 4 drehfestes Zahnrad 6 sowie ein Antriebszahnrad 7 umfasst.

Der elektrische Motor 5 weist eine im wesentlichen zylindrische Gestalt auf und ist in dem Holm, speziell in einem Abschnitt des ersten Gabelarms 2, aufgenommen. Der elektrische Motor 5 weist abtriebsseitig eine Ausgangswelle auf, deren Erstreckung im wesentlichen der Erstreckung des ersten Gabelarms 2 entspricht. Damit steht die Ausgangswelle des Motors 5 unter einem Winkel, im wesentlichen unter einem rechten Winkel, zu der Drehachse des Antriebszahnrades 7, wobei die letztere Drehachse im wesentlichen senkrecht zu der Zeichenebene von Fig. 1 gerichtet ist. Zur Übertragung des Drehmomentes der Ausgangswelle des Motors 5 über das Antriebszahnrad 7 auf das Zahnrad 6 an dem Vorderrad 4 ist drehfest mit der Ausgangswelle des Motors 5 ein bildlich nicht dargestelltes Hilfszahnrad befestigt, das mit dem Antriebszahnrad 7 in kämmenden Eingriff steht, wobei das Hilfszahnrad und das Antriebszahnrad 7 relativ zueinander im wesentlichen senkrecht stehende Drehachsen aufweisen und die Zähnung bzw. der Durchmesser des Hilfszahnrades und des Antriebszahnrades 7 so aufeinander abgestimmt sind, dass zwar eine räumliche Umorientierung des Drehmomentes des Motors 5 stattfindet, der Betrag des Drehmomentes im wesentlichen unverändert bleibt. Das Hilfszahnrad und das Antriebszahnrad 7 bilden damit ein Umlenkgetriebe aus, das das Antriebszahnrad 7 als Bestandteil umfasst.

Das Antriebszahnrad 7 steht in direkt kämmenden Eingriff mit der äußeren Verzahnung des Zahnrades 6. Da der Radius des Antriebszahnrades 7 deutlich geringer ist als der Radius des Zahnrades 6, ist die Zähnung des Antriebszahnrades 7 geringer als die Zähnung des Zahnrades 6, so dass sich die Drehzahl zwischen dem Antriebszahnrad 7 und dem Zahnrad 6 nur wenig erhöht.

Der elektrische Motor 5 ist so ausgestaltet, dass dessen Ausgangsdrehzahl gering ist und nur gering herabgesetzt an das Zahnrad 6 und damit an das Vorderrad 4 weitergegeben wird.

Das Antriebssystem umfasst weiter eine Batterie 8, insbesondere einen wiederaufladbaren Akkumulator, der als Energieversorgung des Motors 5 ausgestaltet ist und in räumlicher Nähe zu dem Motor 5 in dem zweiten Gabelarm 3 des Holms untergebracht ist.

Das Antriebssystem umfasst weiter eine zusätzliche Batterie 9, die an einem Unterrohr 10 des Gehäuses befestigt ist. Es versteht sich, dass die zusätzliche Batterie ebenfalls in dem ersten oder zweiten Gabelarm oder innerhalb des Unterrohrs 10, sofern dieses abschnittsweise hohl ausgebildet ist, angeordnet sein kann.

Alternativ oder ergänzend zu der zusätzlichen Batterie 9 umfasst das Antriebssystem weiter ein Bremssystem, wobei das Zahnrad 6 als Bremsscheibe des Bremssystems ausgebildet ist. Das Zahnrad ist hydraulisch betätigbar, wobei ein Sensor die Ausgangsleistung des Motors 5 erfasst. Die hydraulische Betätigung des Zahnrades 6 als Bremsscheibe umfasst einen bildlich nicht dargestellten Druckminderer, der in einem der beiden Gabelarme 2, 3 angeordnet ist.

Der Motor 5 ist von dem Bediener des Fahrrades mittels eines Kabels oder kabellos betätigbar. Hierzu ist eine Systemsteuereinheit 11 vorgesehen, die in dem ersten Gabelarm 2 des hohlen Holms angeordnet ist. Die Systemsteuereinheit betätigt, auf entsprechende Signale des Bedieners hin, den Motor 5. Im Fall des Bremsens wird der Antrieb des Motors 5 stillgesetzt und die Drehung des Zahnrades 6 zur Speicherung der Energie in Form von elektrisch abrufbarer Energie verwendet, beispielsweise in der Batterie 8 oder der zusätzlichen Batterie 10.

Die Erfindung wurde vorstehend anhand eines Ausführungsbeispiels beschrieben, bei dem das Antriebssystem als Hilfsantriebs eines Fahrrades ausgebildet war. Es versteht sich, dass das Antriebssystem als Antrieb oder Hilfsantrieb auch für ein anderes Zweirad, wie ein Pedelec oder ein E-Bike, oder andere Arten von zwei- oder mehrrädrigen Leichtfahrzeugen, wie motorisch antreibbaren Rollstühlen, vorgesehen sein kann.

### Bezugszeichenliste

- 1: Vorderradgabel
- 2: erster Gabelarm
- 3: zweiter Gabelarm
- 4: Vorderrad
- 5: elektrischer Motor
- 6: Zahnrad
- 7: Antriebszahnrad
- 8: Batterie
- 9: zusätzliche Batterie
- 10: Unterrohr
- 11: Systemsteuereinheit

## Patentansprüche

**1.** Antriebssystem für ein Rad (4) eines Leichtfahrzeuges, umfassend
einen abschnittsweise hohl ausgebildeten Holm (2, 3), an dem das Rad (4) drehbar gelagert ist,
ein mit dem Rad (4) drehfest verbundenes Zahnrad (6), und
einen elektrischen Motor (5), der das Zahnrad (6) antreibt,
**dadurch gekennzeichnet,**
**dass** der Motor (5) innerhalb des hohl ausgebildeten Holms (2, 3) angeordnet ist, und
**dass** der Motor (5) abtriebsseitig ein Antriebszahnrad (7) antreibt, das direkt mit dem Zahnrad (6) kämmt.

**2.** Antriebssystem nach Anspruch 1, **dadurch gekennzeichnet, dass** der Motor (5) abtriebsseitig ein Umlenkgetriebe antreibt.

**3.** Antriebssystem nach Anspruch 1 oder 2, weiter umfassend eine Batterie (8) als Energieversorgung des Motors (5), wobei die Batterie (8) in dem hohl ausgebildeten Holm (2) aufgenommen ist.

**4.** Antriebssystem nach einem der Ansprüche 1 bis 3, weiter umfassend ein Bremssystem, wobei das Zahnrad (6) als Bremsscheibe des Bremssystems ausgebildet ist, die hydraulisch betätigbar ist, und wobei ein Sensor die Ausgangsleistung des Motors (5) erfasst.

**5.** Antriebssystem nach Anspruch 4, **dadurch gekennzeichnet, dass** die hydraulische Betätigung der Bremsscheibe einen Druckminderer umfasst, der in dem Holm angeordnet ist.

**6.** Antriebssystem nach einem der Ansprüche 1 bis 5, **dadurch gekennzeichnet, dass** in einem Bremsbetrieb die von dem Zahnrad (6) übermittelte Energie gespeichert wird.

**7.** Zweirad, insbesondere Fahrrad, Pedelec oder E-Bike, mit einem Antriebssystem nach einem der Ansprüche 1 bis 6, wobei der Holm als Gabel der Vorderrades ausgebildet ist.
